(19) **Europäisches Patentamt / European Patent Office / Office européen des brevets**

(11) **EP 1 514 015 B1**

(12) **FASCICULE DE BREVET EUROPEEN**

(45) Date de publication et mention de la délivrance du brevet:
**18.04.2007 Bulletin 2007/16**

(21) Numéro de dépôt: **03760047.5**

(22) Date de dépôt: **17.06.2003**

(51) Int Cl.:
*F01N 9/00* *(2006.01)*   *F01N 11/00* *(2006.01)*
*F01N 3/023* *(2006.01)*

(86) Numéro de dépôt international:
**PCT/FR2003/001826**

(87) Numéro de publication internationale:
**WO 2003/106823 (24.12.2003 Gazette 2003/52)**

(54) **PROCEDE DE REGENERATION D'UN FILTRE A PARTICULES DE VEHICULE AUTOMOBILE ET SYSTEME DE COMMANDE DE LA REGENERATION D'UN TEL FILTRE**

VERFAHREN ZUR REGENERATION EINES KRAFTFAHRZEUGTEILCHENFILTERS UND SYSTEM ZUR STEUERUNG DER REGENERATION SOLCH EINES FILTERS

METHOD FOR REGENERATING A MOTOR VEHICLE PARTICLE FILTER AND SYSTEM FOR CONTROLLING REGENERATION OF SUCH A FILTER

(84) Etats contractants désignés:
**DE ES GB IT**

(30) Priorité: **18.06.2002 FR 0207494**

(43) Date de publication de la demande:
**16.03.2005 Bulletin 2005/11**

(73) Titulaire: **Renault s.a.s.**
**92100 Boulogne Billancourt (FR)**

(72) Inventeurs:
• **DA-SILVA, Manuel**
**F-91590 La Ferte Alais (FR)**
• **GUYON, Marc**
**F-91290 La Norville (FR)**
• **RADENAC, Erwan**
**78730 Rochefort en Yvelines (FR)**

(74) Mandataire: **Lelkes, Robert et al**
**Bureau Casalonga & Josse**
**Bayerstrasse 73**
**80335 München (DE)**

(56) Documents cités:
**WO-A-01/48358        FR-A- 2 799 504**
**FR-A- 2 814 498**

• **PATENT ABSTRACTS OF JAPAN vol. 2002, no. 02, 2 avril 2002 (2002-04-02) & JP 2001 280118 A (ISUZU MOTORS LTD), 10 octobre 2001 (2001-10-10)**
• **PATENT ABSTRACTS OF JAPAN vol. 2002, no. 03, 3 avril 2002 (2002-04-03) & JP 2001 317330 A (TOYOTA MOTOR CORP), 16 novembre 2001 (2001-11-16)**

## Description

La présente invention concerne un procédé de régénération d'un filtre à particules de véhicule automobile, ainsi qu'un système de commande de la régénération d'un tel filtre.

L'hétérogénéité des processus de combustion dans les moteurs, en particulier dans les moteurs Diesel, a pour effet de générer des particules de carbone, qui ne peuvent être brûlées efficacement dans le moteur. Cela se traduit par l'apparition, en sortie de la ligne d'échappement, de fumées noires, caractéristiques des moteurs Diesel. Ce phénomène apparaît en particulier lors des phases de démarrage et lors de fortes accélérations.

La présence d'un filtre à particules dans la ligne d'échappement du moteur permet de diminuer considérablement la quantité de particules, poussières et autres suies, émises dans l'atmosphère, et de satisfaire aux normes antipollution.

Des dispositifs de régénération pilotés permettent de brûler périodiquement les particules piégées dans le filtre et d'éviter le colmatage de ce dernier. Voir par exemple le document Japonais: JP 2001280118.

Ceci est effectué en élevant la température au sein du filtre à particules jusqu'à une température de l'ordre de 550 à 600°C, température à partir de laquelle les particules de carbone retenues dans le filtre s'enflamment spontanément.

La combustion de ces particules provoque un dégagement d'énergie, en fonction des conditions de fonctionnement du moteur. Cette énergie peut être évacuée par le flux de gaz d'échappement en provenance du moteur, transmise au lit de suies dont est chargé le filtre ou être transmise aux différents éléments entrant dans la constitution du filtre à particules, ou, de manière générale, du système de dépollution.

Ainsi, en fonction des conditions de roulage du véhicule, il peut arriver que l'énergie dégagée par la combustion des particules de carbone ne puisse plus être évacuée. Cette situation se traduit par une augmentation considérable de la vitesse des réactions chimiques engendrées et un emballement de ces dernières. Ce type de processus peut dès lors engendrer une altération du système de filtration des particules.

Des dispositifs de diagnostic de l'état de fonctionnement du système de filtration provoquent généralement le déclenchement de la régénération lorsque la quantité de suies stockées dans le filtre à particules est telle que la régénération peut être effectuée dans des conditions parfaitement contrôlables.

Néanmoins, il est possible que dans des conditions de roulage très spécifiques, par exemple en environnement urbain, les conditions requises pour l'initiation de la régénération ne soient pas atteintes. Le lancement d'une régénération dans ces conditions peut avoir des conséquences néfastes pour le système de filtrage.

Aussi, le but de l'invention est de fournir un procédé de régénération d'un filtre à particules permettant de déterminer les conséquences d'une régénération, pour le système de filtration, en fonction des conditions de roulage du véhicule.

Ainsi, l'invention propose un procédé de régénération d'un filtre à particules de véhicule automobile, suivant lequel on met en oeuvre des moyens de régénération du filtre dès que la valeur du niveau de chargement du filtre dépasse une valeur de seuil prédéterminée.

Selon une caractéristique générale de ce procédé, on procède à un calcul d'un paramètre représentatif des conditions de fonctionnement des moyens de régénération, et l'on commande le fonctionnement des moyens de régénération en fonction de la valeur dudit paramètre.

Selon une autre caractéristique de ce procédé de régénération, le calcul dudit paramètre est effectué en permanence au cours du roulage du véhicule.

Le calcul dudit paramètre est par exemple effectué au cours de la mise en oeuvre des moyens de régénération.

Selon une autre caractéristique du procédé selon l'invention, le paramètre représentatif des conditions de fonctionnement des moyens de régénération est constitué par le rapport entre le débit des gaz d'échappement issus du moteur du véhicule et la masse de suies brûlées au cours de la mise en oeuvre des moyens de régénération, pendant une période de temps prédéterminée.

Par exemple, ce paramètre représentatif des conditions de fonctionnement des moyens de régénération est constitué par le rapport entre le débit instantané des gaz d'échappement et la vitesse de combustion des suies.

Selon un mode de mise en oeuvre, le fonctionnement des moyens de régénération est commandé à partir d'une comparaison entre la valeur dudit paramètre et au moins une valeur de seuil stockée en mémoire.

Selon un autre mode de mise en oeuvre, le débit des gaz d'échappement est extrait d'une cartographie stockée en mémoire dans un calculateur central de gestion du fonctionnement du moteur du véhicule.

La masse de suies brûlées est par exemple extraite d'une cartographie stockée en mémoire dans le calculateur central. Elle peut également être déterminée à partir de la masse de suies précédemment brûlées et de la vitesse de régénération du filtre.

Selon un mode de mise en oeuvre avantageux, la vitesse de régénération du filtre est extraite d'une cartographie stockée en mémoire dans un calculateur central de gestion du fonctionnement du moteur du véhicule, en fonction de la température interne du filtre à particules.

Enfin, la température interne *Tfap* du filtre à particules est par exemple calculée à partir de la relation :

$$Tfap = aTe + (1-a) \times Ts$$

dans laquelle :

Te désigne la température d'entrée du filtre à particules ;

Ts désigne la température de sortie du filtre à particules ; et

a désigne un coefficient élaboré en fonction de la différence entre la température d'entrée Te et la température de sortie Ts, à partir d'une fonction cartographiée dans le calculateur central.

Selon l'invention, il est également proposé un système de commande de la régénération d'un filtre à particules de véhicule automobile, comprenant des moyens de contrôle du niveau de chargement du filtre à particules pour provoquer la mise en oeuvre de moyens de régénération.

Selon un aspect de ce système, celui-ci comporte en outre des moyens de calcul d'un paramètre représentatif des conditions de fonctionnement des moyens de régénération pour commander le fonctionnement des moyens de régénération en fonction de la valeur dudit paramètre.

D'autres buts, caractéristiques et avantages de l'invention apparaîtront à la lecture de la description suivante, donnée uniquement à titre d'exemple non limitatif, et faite en référence au dessin annexé illustrant, de manière schématique, la structure d'un moteur à combustion interne équipé d'un filtre à particules mettant en oeuvre le procédé selon l'invention.

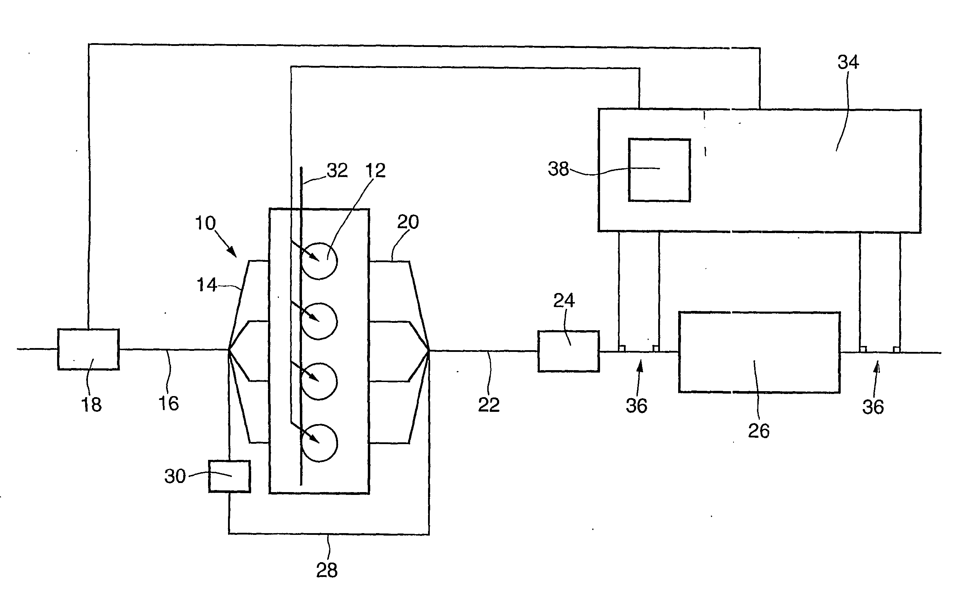

Sur la figure 1, le moteur, désigné par la référence numérique générale 10, est un moteur de type Diesel suralimenté par turbocompresseur.

Dans l'exemple représenté, le moteur 10 comporte quatre cylindres, tels que 12, disposés en ligne. Il est alimenté en air frais par l'intermédiaire d'un répartiteur d'admission 14, lui-même alimenté par une conduite d'alimentation 16 pourvue d'un filtre à air (non représentée) et équipée d'un débitmètre 18.

Par ailleurs, le moteur 10 est pourvu d'un collecteur d'échappement 20, en communication avec une ligne d'échappement 22 pourvue d'un système de filtration de particules, constitué essentiellement d'un pot catalytique d'oxydation 24 et d'un filtre à particules 26.

Un circuit de recirculation des gaz d'échappement 28, qui est pourvu d'une vanne de recirculation 30, récupère une partie des gaz d'échappement issus de la combustion et les réinjecte dans le répartiteur d'admission 14.

Le moteur 10 est alimenté en carburant par l'intermédiaire d'un circuit d'alimentation 32. Par exemple, ce circuit d'alimentation est un circuit à haute pression et à rampe commune.

Enfin, un calculateur dûment programmé, désigné par la référence numérique générale 34, gère le fonctionnement du moteur 10, notamment la quantité de carburant injectée ou l'instant d'allumage du moteur, de manière à délivrer le couple demandé par le conducteur.

En particulier, le calculateur 34 reçoit des signaux de mesure en provenance de capteurs, tels que 36, équipant la ligne d'échappement en amont et en aval du filtre à particules 26, en provenance du débitmètre 18 équipant la conduite d'admission 16, et dispose de la valeur d'autres variables de fonctionnement du moteur, tels que le régime de fonctionnement du moteur, la température de l'air ambiant, celle du liquide de fonctionnement, etc., ..., comme cela est bien connu de l'homme du métier.

Il incorpore tous les moyens matériels et logiciels pour piloter les différents paramètres de fonctionnement du moteur, tels que l'injection de carburant, la levée des soupapes d'admission et d'échappement, la quantité de gaz recirculés, ..., à partir d'une cartographie 38 stockée en mémoire dans le calculateur 34.

En particulier, il surveille la valeur du niveau de chargement du filtre à particules, et, lorsque cette valeur dépasse une valeur de seuil prédéterminée, il met en oeuvre des moyens de régénération du filtre 26. Ces moyens de régénération sont constitués par des moyens de type classique, bien connus de l'homme du métier. Ils ne seront donc pas décrits en détail par la suite.

On notera, néanmoins, que ces moyens consistent essentiellement en des moyens permettant de créer un environnement gazeux particulier dans le filtre à particules, qui est chauffé à une température de l'ordre de 550 à 600°C, pour apporter une énergie nécessaire à l'inflammation spontanée des particules de carbone contenues dans le filtre 26.

En ce qui concerne la détermination du niveau de chargement du filtre, celle-ci peut être effectuée par différents moyens, par exemple en mesurant la différence de pression régnant en amont et en aval du filtre à particules.

Par ailleurs, afin d'éviter que la régénération ne soit effectuée dans des conditions telles qu'elle risquerait d'altérer les éléments entrant dans la constitution du système de traitement des effluents gazeux, le calculateur 34 calcule, au cours du roulage du véhicule, et en particulier au cours de la régénération, un paramètre représentatif des conditions de fonctionnement des moyens de régénération, et pilote ces moyens de régénération, en fonction de la valeur du paramètre ainsi calculée, de manière à éviter que la régénération ne s'effectue dans des situations telles que l'énergie dégagée par la combustion des suies ne puisse plus être évacuée, ce qui se traduirait par un emballement des réactions chimiques mises en oeuvre.

Ce paramètre de contrôle est par exemple constitué par le rapport entre le débit des gaz d'échappement et la masse de suies brûlées. Ce rapport est calculé périodiquement, au cours de la régénération, pendant une période de temps pouvant aller de la seconde jusqu'à une durée correspondant à la phase de régénération.

Comme on le conçoit, dans le cas où cette période est de l'ordre de la seconde, ce rapport correspond en fait au rapport entre le débit instantané des gaz d'échappement et la vitesse de combustion des suies.

Le calculateur 34 calcule alors la différence entre le rapport ainsi calculé et des valeurs de seuil d1réf et d2réf, implantées en mémoire, et obtenues par apprentissage préalable.

Ainsi, si le paramètre calculé est inférieur à la première valeur de seuil d1réf, il est considéré que la régénération se déroule normalement. L'énergie engendrée par les réactions chimiques mises en oeuvre est totalement évacuée par le flux de gaz d'échappement. Au contraire, si le paramètre est compris entre d1réf et d2réf, il existe un risque que la régénération s'emballe.

Les conditions de roulage, et donc les sollicitations du conducteur, conditionnent alors l'apparition d'un tel emballement. Dans ces conditions, il existe un risque potentiel d'endommagement du filtre à particules. Le calculateur 34 provoque alors l'exécution d'une procédure de commande des moyens de régénération, de manière à limiter ou diminuer la vitesse de la régénération, voire, le cas échéant, à la stopper.

Enfin, si le paramètre calculé est supérieur à la deuxième valeur de seuil d2réf, on considère que la régénération s'est emballée et que le filtre a été endommagé. L'écart entre le paramètre et cette valeur de seuil d2réf permet alors de donner une indication sur le degré d'endommagement. Le conducteur du véhicule est alors informé de cette situation et celui-ci est invité à se rendre dans un garage pour vérification et maintenance.

En ce qui concerne la procédure de calcul du paramètre de contrôle du fonctionnement des moyens de régénération, le débit de gaz est une valeur qui est extraite de la cartographie 38, en fonction des paramètres de fonctionnement du moteur. La masse de suies brûlées peut également être extraite de la cartographie 38. En variante, elle peut être calculée à partir de la masse de suies brûlées précédemment, c'est-à-dire lors de la période de calcul précédente, et de la vitesse de régénération du filtre.

En d'autres termes, la masse de suies M(i+1) à l'instant i+1, est déterminée à partir de la relation :

$$M(i+1) = M(i)-V(i),$$

dans laquelle :

M(i) désigne la masse de suies à l'instant i, et
V(i) désigne la vitesse de régénération à l'instant i. La vitesse de régénération V(i) est également extraite de la cartographie 38, en fonction de la température interne du filtre à particules 26, à partir de la relation suivante :

$$Tfap = aTe + (1-a) \times Ts$$

dans laquelle :

Te désigne la température d'entrée du filtre à particules ;
Ts désigne la température de sortie du filtre à particules ; et
a désigne un coefficient élaboré en fonction de la différence entre la température d'entrée Te et la température de sortie Ts, à partir d'une fonction cartographiée dans le calculateur central.

En d'autres termes, pour calculer la masse de suies brûlées, le calculateur 34 procède au calcul de la température interne du filtre à particules, à partir de la relation précédemment décrite, et extrait de la cartographie 38 une vitesse de régénération correspondante, puis calcule la masse de suies brûlées à partir de cette vitesse de régénération.

Comme on le conçoit, l'invention qui vient d'être décrite permet, en cours de régénération, de disposer d'une indication des risques associés aux conditions de régénération et d'adapter en conséquence le fonctionnement des moyens de régénération de manière à éviter toute altération du filtre à particules.

**Revendications**

1. Procédé de régénération d'un filtre à particules (36) de véhicule automobile, suivant lequel on met en oeuvre des moyens de régénération du filtre dès que la valeur du niveau de chargement du filtre dépasse une valeur de seuil prédéterminée, **caractérisé par le fait que** l'on procède à un calcul d'un paramètre représentatif des conditions de fonctionnement des moyens de régénération et l'on commande le fonctionnement des moyens de régénération en fonction de la valeur dudit paramètre, le paramètre représentatif des conditions de fonctionnement des moyens de régénération étant élaboré par calcul du rapport entre le débit des gaz d'échappement issus du moteur du véhicule et la masse de suies brûlées pendant une période de temps prédéterminée ou par le rapport entre le débit instantané des gaz d'échappement et la vitesse de combustion des suies.

2. Procédé de régénération selon la revendication 1, **caractérisé en ce que** le calcul dudit paramètre est effectué en permanence au cours du roulage du véhicule.

3. Procédé de régénération selon l'une des revendications 1 et 2, **caractérisé en ce que** le calcul dudit paramètre est effectué au cours de la mise en oeuvre des moyens de régénération.

4. Procédé de régénération selon l'une quelconque des revendications 1 à 3, **caractérisé en ce que** le fonctionnement des moyens de régénération est commandé à partir d'une comparaison entre la valeur dudit paramètre et au moins une valeur de seuil stockée en mémoire.

5. Procédé, de régénération selon l'une quelconque des revendications 1 à 4, **caractérisé en ce que** le débit des gaz d'échappement est extrait d'une cartographie (38) stockée en mémoire dans un calculateur central de gestion du fonctionnement du moteur du véhicule.

6. Procédé de régénération selon l'une quelconque des revendications 1 à 4, **caractérisé en ce que** la masse de suies brûlées est extraite d'une cartographie (38) stockée en mémoire dans un calculateur central de gestion du fonctionnement du moteur du véhicule.

7. Procédé de régénération selon l'une quelconque des revendications 1 à 4, **caractérisé en ce que** la masse de suies brûlées est déterminée à partir de la masse de suies précédemment brûlées et de la vitesse de régénération du filtre.

8. Procédé de régénération selon la revendication 7, **caractérisé en ce que** la vitesse de régénération du filtre est extraite d'une cartographie (38) stockée en mémoire dans un calculateur central de gestion du fonctionnement du moteur du véhicule, en fonction de la température interne du filtre à particules.

9. Procédé de régénération selon la revendication 8, **caractérisé en ce que** la température interne Tfap du filtre à particules est calculée à partir de la relation :

$$Tfap = aTe + (1-a) \times Ts$$

dans laquelle :

Te désigne la température d'entrée du filtre à particules ;
Ts désigne la température de sortie du filtre à particules ; et
a désigne un coefficient élaboré en fonction de la différence entre la température d'entrée Te et la température de sortie Ts, à partir d'une fonction cartographiée dans le calculateur central.

10. Système de commande de la régénération d'un filtre à particule (26) de véhicule automobile, comprenant des moyens de contrôle (34) du niveau de chargement du filtre à particules pour provoquer la mise en oeuvre de moyens de régénération du filtre, **caractérisé en ce qu'**il comporte en outre des moyens de calcul d'un paramètre représentatif des conditions de fonctionnement des moyens de régénération pour commander le fonctionnement des moyens de régénération en fonction de la valeur dudit paramètre selon le procédé de régénération de l'une des revendications 1 à 9.

## Claims

1. Method for regenerating a particulate filter (36) of a motor vehicle, whereby filter regeneration means are activated as soon as the filter loading level exceeds a predefined threshold value, **characterized in that** a representative parameter of the operating conditions of the regeneration means is calculated, and the operation of the regeneration means is contolled according to the value of the said parameter, the representative parameter of the operating conditions of the regeneration means being determined by calculating the ratio between the flow rate of exhaust gases from the vehicle engine and the mass of soot burned during a predefined time interval, or by the ratio between the instantaneous flow rate of the exhaust gases and the soot combustion rate.

2. Regeneration method according to Claim 1, **characterized in that** the said parameter is calculated continuously while the vehicle is running.

3. Regeneration method according to either of Claims 1 and 2, **characterized in that** the said parameter is calculated during the activation of the regeneration means.

4. Regeneration method according to any one of Claims 1 to 3, **characterized in that** the operation of the regeneration means is controlled from a comparison between the value of the said parameter and at least one threshold value stored in memory.

5. Regeneration method according to any one of Claims 1 to 4, **characterized in that** the exhaust gas flow rate is extracted from a mapping (38) stored in memory in a central computer for managing the operation of the vehicle's engine.

6. Regeneration method according to any one of Claims 1 to 4, **characterized in that** the mass of soot burned is extracted from a mapping (38) stored in memory in a central computer for managing the operation of the vehicle's engine.

7. Regeneration method according to any one of Claims 1 to 4, **characterized in that** the mass of soot burned is determined from the mass of soot previously burned and the filter regeneration rate.

**8.** Regeneration method according to Claim 7, **characterized in that** the filter regeneration rate is extracted from a mapping (38) stored in memory in a central computer for managing the operation of the vehicle's engine, as a function of the internal temperature of the particulate filter.

**9.** Regeneration method according to Claim 8, **characterized in that** the internal temperature Tfap of the particulate filter is calculated using the equation:

$$\texttt{Tfap = aTe + (1-a)} \times \texttt{Ts}$$

where:

Te is the inlet temperature of the particulate filter;
Ts is the outlet temperature of the particulate filter; and
a is a coefficient determined from the difference between the inlet temperature Te and the outlet temperature Ts, using a function mapped in the central computer.

**10.** System for controlling the regeneration of a particulate filter (26) of a motor vehicle, comprising means (34) for monitoring the loading level of the particulate filter to cause the activation of filter regeneration means, **characterized in that** it further comprises means for calculating a representative parameter of the operating conditions of the regeneration means to control the operation of the regeneration means according to the value of the said parameter by the regeneration method according to one of Claims 1 to 9.


**Patentansprüche**

**1.** Verfahren zur Regeneration eines Partikelfilters (36) eines Kraftfahrzeugs, wonach Mittel zur Regeneration des Filters eingesetzt werden, sobald der Wert des Beladungsniveaus des Filters einen vorbestimmten Schwellenwert überschreitet, **gekennzeichnet durch** die Tatsache, dass eine Berechnung eines Parameters erfolgt, der für die Funktionsbedingungen der Regenerationsmittel repräsentativ ist, und dass die Funktion der Regenerationsmittel in Abhängigkeit vom Wert dieses Parameters gesteuert wird, wobei der für die Funktionsbedingungen der Regenerationsmittel repräsentative Parameter **durch** Berechnung des Verhältnisses zwischen dem Abgasmassenstrom aus dem Motor des Fahrzeugs und der Masse des verbrannten Rußes während eines vorbestimmten Zeitraums oder **durch** das Verhältnis zwischen dem augenblicklichen Abgasmassenstrom und der Geschwindigkeit der Rußverbrennung erstellt wird.

**2.** Verfahren zur Regeneration nach Anspruch 1, **dadurch gekennzeichnet, dass** die Berechnung des Parameters während der Fahrt des Fahrzeugs fortwährend durchgeführt wird.

**3.** Verfahren zur Regeneration nach einem der Ansprüche 1 und 2, **dadurch gekennzeichnet, dass** die Berechnung des Parameters während des Einsatzes der Regenerationsmittel durchgeführt wird.

**4.** Verfahren zur Regeneration nach irgendeinem der Ansprüche 1 bis 3, **dadurch gekennzeichnet, dass** die Funktion der Regenerationsmittel ausgehend von einem Vergleich zwischen dem Wert des Parameters und mindestens einem im Speicher gespeicherten Schwellenwert gesteuert wird.

**5.** Verfahren zur Regeneration nach irgendeinem der Ansprüche 1 bis 4, **dadurch gekennzeichnet, dass** der Abgasmengenstrom einer Kartographie (38) entnommen wird, die im Speicher eines Zentralrechners zur Steuerung der Funktion des Kraftfahrzeugmotors gespeichert ist.

**6.** Verfahren zur Regeneration nach irgendeinem der Ansprüche 1 bis 4, **dadurch gekennzeichnet, dass** die verbrannte Rußmasse einer Kartographie (38) entnommen wird, die im Speicher eines Zentralrechners zur Steuerung der Funktion des Kraftfahrzeugmotors gespeichert ist.

**7.** Verfahren zur Regeneration nach irgendeinem der Ansprüche 1 bis 4, **dadurch gekennzeichnet, dass** die verbrannte Rußmasse ausgehend von der vorher verbrannten Rußmasse und von der Regenerationsgeschwindigkeit des Filters bestimmt wird.

**8.** Verfahren zur Regeneration nach Anspruch 7, **dadurch gekennzeichnet, dass** die Regenerationsgeschwindigkeit des Filters einer Kartographie (38) entnommen wird, die im Speicher eines Zentralrechners zur Steuerung der Funktion des Fahrzeugmotors gespeichert ist, in Abhängigkeit von der inneren Temperatur des Partikelfilters.

**9.** Verfahren zur Regeneration nach Anspruch 8, **dadurch gekennzeichnet, dass** die innere Temperatur Tfap des Partikelfilters berechnet wird, ausgehend von dem Verhältnis

$$\texttt{Tfap = aTe + (1-a) x Ts}$$

worin

Te die Eingangstemperatur des Partikelfilters bezeichnet;

Ts die Ausgangstemperatur des Partikelfilters bezeichnet; und

a einen Koeffizienten bezeichnet, der in Abhängigkeit von der Differenz zwischen der Eingangstemperatur Te und der Ausgangstemperatur Ts, ausgehend von einer kartographierten Funktion im Zentralrechner erstellt wird.

10. Steuerungssystem der Regeneration eines Partikelfilters (26) eines Kraftfahrzeugs, das Kontrollmittel (34) des Beladungsniveaus des Partikelfilters umfasst, um den Einsatz von Mitteln zur Regeneration des Filters auszulösen, **dadurch gekennzeichnet, dass** es ferner Mittel zur Berechnung eines repräsentativen Parameters der Funktionsbedingungen der Regenerationsmittel umfasst, um die Funktion der Regenerationsmittel in Abhängigkeit vom Wert des Parameters nach dem Verfahren zur Regeneration aus einem der Ansprüche 1 bis 9 zu steuern.